# EUROPÄISCHE PATENTANMELDUNG

(11) **EP 4 290 205 A2**
(43) Veröffentlichungstag der Anmeldung: **13.12.2023**
(21) Anmeldenummer: 23177169.2
(22) Anmeldetag: 05.06.2023
(51) Int. Cl.: G01M 7/02, G01M 7/04

(54) **TESTVORRICHTUNG FÜR SCHWINGEND BELASTETE BAUTEILE**

(30) Priorität: 08.06.2022 DE 102022205787
(71) Anmelder: ZF Friedrichshafen AG, 88046 Friedrichshafen (DE)
(72) Erfinder: Stengel, Frank, 97528 Sulzdorf a. d. Lederhecke (DE); Eberlein, Ludwig, 97717 Sulzthal (DE)
(74) Vertreter: ZF Friedrichshafen AG

(57) **Zusammenfassung**

Vorrichtung zum Testen von schwingend belasteten Bauteilen, umfassend ein Gerüst und mindestens einen elektrischen Linearantrieb mit einem Stator als Primärteil und einem dazu translatorisch beweglichen Sekundärteil, das an eine Aufnahme für das zu testende Bauteil angeschlossen ist, wobei das Gerüst mindestens zwei parallele Führungssäulen aufweist, an denen eine Führungsplatte mit der Aufnahme gleitend gelagert ist, wobei das Sekundärteil kraftübertragend mit der Führungsplatte in Wirkverbindung steht, wobei das Primärteil pro Sekundärteil zweifach ausgeführt ist und der Linearantrieb eine zum Gerüst separate auswechselbare Baueinheit bildet.

## Beschreibung

Die Erfindung betrifft eine Testvorrichtung für schwingend belastete Bauteile gemäß dem Oberbegriff von Patentanspruch 1.

Testvorrichtungen für schwingend belastete Bauteile werden z. B. bei der Auslegung von Schwingungsdämpfern eingesetzt, um die optimale Dämpfkrafteinstellung zu bestimmen oder zu kontrollieren. Dazu wird eine standardisierte Vorrichtung eingesetzt, die entweder einen Hydraulikantrieb oder einen Antrieb mit einer Kurbelschwinge umfasst. Aufgrund des Hydraulikantriebs benötigt die Vorrichtung einen vergleichsweise großen Bauraum und eine hohe Leistungsaufnahme. Vielfach besteht aber die Anforderung, dass die Vorrichtung mobil sein muss, d. h. sie soll z.B. in einem Lkw eingesetzt werden, mit dem man zu Teststrecken fährt.

Aus der US 8,844,345 B1 ist eine Vorrichtung bekannt, die einen elektrischen Linearantrieb mit einem plattenförmigen Rotor aufweist, der mit einer Aufnahme für das zu testende Bauteil versehen ist. Der Stator ist an einem äußeren plattenförmigen Gerüst angeschlossen. Ggf. können auch zwei elektrische Linearantriebe eingesetzt werden, wie die Ausführung nach Fig. 13 zeigt. Dem Rotor funktional parallel geschaltet ist ein Pneumatikzylinder, so dass die Vorrichtung zwei völlig verschiedene Antriebssysteme aufweist, die wiederum zwei getrennte Versorgungseinrichtungen benötigen. Eine derartige Vorrichtung ist für den mobilen Einsatz tendenziell ungeeignet, da nur ein beschränkter Nutzraum zur Verfügung steht.

Die Aufgabe der vorliegenden Erfindung besteht darin, eine Vorrichtung zum Testen von Bauteilen bereitzustellen, die auch mobil in einem begrenzten Bauraum einsetzbar ist.

Die Teilaufgabe der Bereitstellung einer kompakten Vorrichtung wird dadurch gelöst, dass das Gerüst mindestens zwei parallele Führungssäulen aufweist, an denen eine Führungsplatte mit der Aufnahme gleitend gelagert ist, wobei das Sekundärteil kraftübertragend mit der Führungsplatte in Wirkverbindung steht, wobei das Primärteil pro Sekundärteil zweifach ausgeführt ist und der Linearantrieb eine zum Gerüst separate auswechselbare Baueinheit bildet.

Ein wesentlicher Vorteil der Vorrichtung besteht darin, dass sich durch die Verwendung von zwei Primärteilen die Anziehungskräfte zwischen den Primärteilen und dem Sekundärteil soweit kompensieren, dass auf die Führungssäulen nur noch eine unbedeutende Querkraft einwirkt. Die erzielbaren Messergebnisse der Vorrichtung werden durch diese Bauform verbessert, aber auch der technische Aufwand für eine gute Führungsfunktion.

Ein weiterer Vorteil dieses Bauprinzips besteht darin, dass der Linearantrieb nicht Teil eines Gehäuses ist. Man kann den Linearantrieb als Baueinheit demontieren und die weiteren Komponenten der Vorrichtung werden dadurch nicht in ihrer Statik beeinflusst. Deshalb kann abweichend zum genannten Stand der Technik der Linearantrieb in seiner Gesamtheit sehr individuell einer Anforderung angepasst werden.

In konsequenter Detailierung ist das Sekundärteil räumlich zwischen den beabstandeten Führungssäulen angeordnet. Mit dieser Maßnahme sollen Querkräfte auf die Führungssäulen minimiert werden.

Gemäß einem vorteilhaften Unteranspruch weist die Vorrichtung optional zwei Paare von Führungssäulen aufweist, die gemeinsam die Aufnahme führen. Mittels dieser Maßnahme soll die Kraftaufnahme bzw. die mechanische Abstützung des zu testenden Bauteils verbessert werden.

Bei entsprechend hoch zu belastendenden Bauteilen kann man vorsehen, dass die Vorrichtung zwei parallel wirkende Linearantriebe aufweist. Die Modulbauweise des Linearantriebs zu den Führungssäulen erleichtert den bedarfsweisen Einsatz von mehreren Linearantrieben.

Vorteilhafterweise weist das Sekundärteil eine Anordnung von reihenförmigen Permanentmagneten auf. Die generelle Verwendung von Permanentmagneten für das Sekundärteil bietet den Vorteil, dass am Sekundärteil keine schweren Versorgungs und/oder Messleitungen angebracht werden müssen, die ein sogenanntes Schleppmoment bei der Bewegung des Sekundärteils mit sich bringen würden. Die Reihenförmige Ausgestaltung der Permanentmagneten wiederum erlaubt es, die Baulänge des Sekundärteils feinstufig dimensionieren zu können. Die Permanentmagneten können bedarfsgerecht eingesetzt werden, wodurch sich folglich auch die Masse des Sekundärteils signifikant auf ein Mindestmaß reduziert.

Im Hinblick auf einen möglichst einfachen Aufbau der Gesamtvorrichtung weisen die Führungssäulen eine verbindende Haltebrücke auf, an der eine Gegenaufnahme für das zu testende Bauteil montiert ist.

Bei einer Vorrichtung, die mobil betrieben wird, d. h. z. B. auf einem Lkw, ist die Stromeinspeisung über die Netzanschlussleistung oftmals in der Praxis begrenzt. Um auch Spitzenbelastungen mit der Vorrichtung simulieren zu können, die mit einem im mobilen Einsatz verfügbaren Netz nicht mehr darstellbar sind, umfasst der Linearantrieb einen Netzanschluss und dazu mindestens einen parallelen Stromspeicher. Als Stromspeicher können beispielsweise Kondensatoren eingesetzt werden.

Im Hinblick auf den Unfallschutz für das Bedienpersonal weist der Linearantrieb eine Steuerung zum gezielten Ansteuern des Linearantriebs und funktional in Reihe zur Steuerung eine elektrische Sicherheitseinrichtung gegen unbeabsichtigten Start der Vorrichtung auf. Grundsätzlich könnte man auch eine mechanische Blockierung gegen den unbeabsichtigten Start vorsehen, doch wäre der konstruktive Aufwand für eine derartige Sicherheitseinrichtung deutlich größer.

Eine weitere Teilaufgabe bezüglich der Optimierung des Energieeinsatzes zum Betrieb der Vorrichtung wird dadurch gelöst, indem die Vorrichtung zusätzlich zu einem Netzanschluss einen Stromspeicher aufweist und anhand eines Belastungsspektrums der Vorrichtung ein Strombedarf für den Betrieb der Vorrichtung ermittelt wird, wobei über den ermittelten Strombedarf die Stromspeichergröße oder die mögliche Ladekapazität bestimmt wird. Die Vorrichtung könnte technisch deutlich einfacher gehalten werden, wenn man von einem maximalen Bedarf für den Linearantrieb ausgeht und für diesen Bedarf auch die Stromversorgung auslegt. Für den mobilen Einsatz wäre diese Herangehensweise aber suboptimal, da die mobile Stromversorgung auf max. 400 V, 32 A, beschränkt ist, lässt sich diese einfache Bauform nicht umsetzen. In Betriebsphasen der Vorrichtung mit einer geringeren Belastung, also auch einem geringeren Strombedarf wird der zur Verfügung stehenden Überschuss für die Aufladung der Speicher genutzt. Man benötigt also nicht unbedingt separate Ladezeiten für die Speicher, sondern kann Betriebszeiten und Ladezeiten durch eine sinnvolle Organisation eines Belastungsprofils für das zu testende Bauteil und damit für die Vorrichtung miteinander verbinden.

Eine weitere Teillösung zur Überprüfung der Funktionssicherheit des Linearantriebs, zeichnet sich dadurch aus, dass der Sicherheitstest einen Falltest des Sekundärteils umfasst, indem
- das Sekundärteil in eine angehobene Ausgangsposition gebracht wird,
- die Stromversorgung für den Linearmotor unterbrochen und die Schutzeinrichtung aktiviert wird, wodurch das Sekundärteil eine erste Fallbewegung ausführt
- Erfassen einer ersten Fallzeit
- erneutes Anheben des Sekundärteils in die besagte Ausgangsposition
- die Stromversorgung unterbrochen und die Schutzeinrichtung deaktiviert wird
- Erfassen einer zweiten Fallzeit
- die beiden Fallzeiten verglichen werden und bei unterschiedlicher Fallcharakteristik ein Fehler signalisiert wird.

Bei einer elektronischen Schutzeinrichtung kann man per Augenschein nicht erkennen, ob die gewünschte Funktionalität gewährleistet ist, im Gegensatz zu einer mechanischen Blockierung als Schutzeinrichtung. Um die Funktionstüchtigkeit erkennen zu können, wird der Falltest vor der Inbetriebnahme und ggf. in Abhängigkeit der Nutzungszeiten der Vorrichtung mehrfach durchgeführt. Bedingt durch den sehr simplen Ablauf kann der Test mit einem sehr geringen Zeitaufwand vorgenommen werden und verlangt auch kein besonderes Prüfpersonal für die Durchführung. Die einfachste Form der unterschiedlichen Fallcharakteristik besteht darin, dass sich die Fallzeiten unterscheiden. Es kann aber auch der Fall eintreten, dass die beiden Fallzeiten zwar identisch sind, jedoch der Geschwindigkeitsverlauf des Sekundärteils unterschiedlich ist.

Eine weitere Teillösung zur energieoptimierten Ansteuerung der Vorrichtung besteht darin, dass die Vorrichtung einen Datenspeicher für relevante Parameter des zu testenden Bauteils aufweist, wobei ein Parameter eine dem Antrieb entgegenstehenden Widerstandskraft des Bauteils beschreibt, und diese Widerstandskraft einer Ansteuerung für den elektrischen Linearantrieb zur Bestimmung der Antriebskraft zugeführt wird. So kann man z. B. die Dämpfkraft eines zu testenden Schwingungsdämpfers als Haltekraft ausnutzen, um einen stationäre Betriebspunkt einzuhalten. Über die bekannte Widerstandskraft kann z. B. die Aufladung der elektrischen Speicher geregelt werden.

Anhand der folgenden Figurenbeschreibung soll die Erfindung näher erläutert werden. Es zeigt:
- Figur 1: Prinzipdarstellung der Vorrichtung;
- Figur 2: Seitenansicht zur Figur 1.

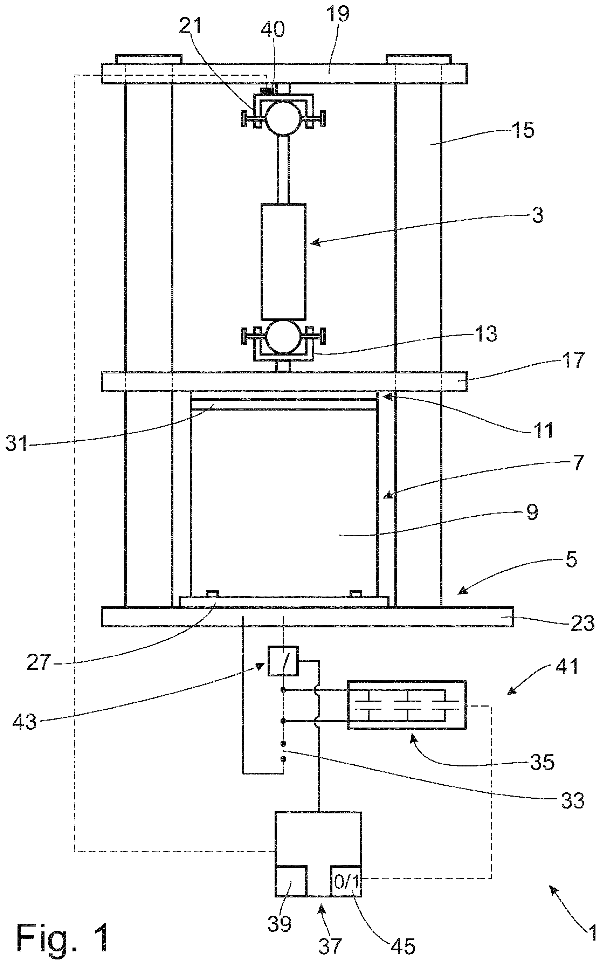

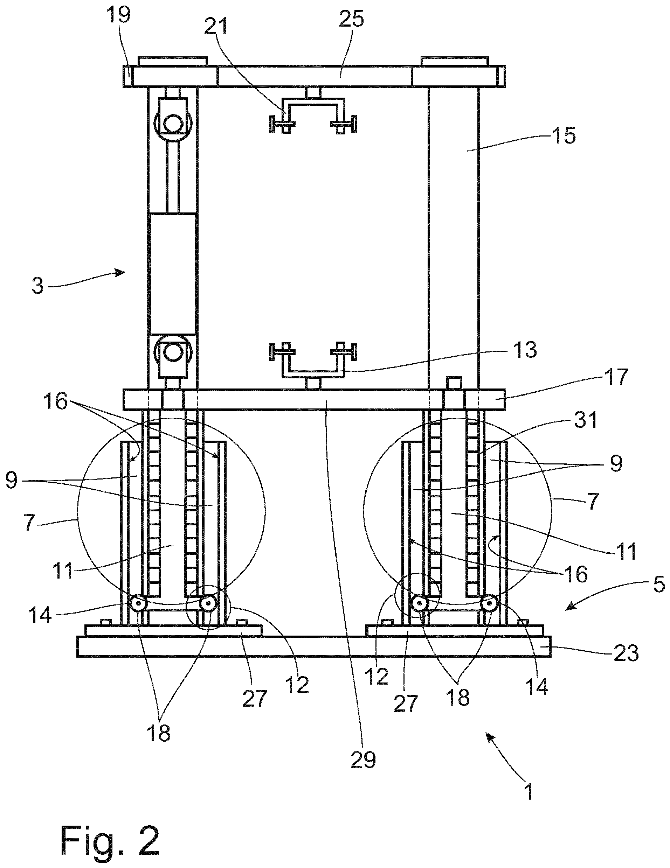

Die Zusammenschau der Figuren 1 und 2 zeigt eine Vorrichtung 1 zum Testen von schwingend belasteten Bauteilen 3, z. B. einen an sich bekannten Schwingungsdämpfer, wie er in einem Fahrwerk, einer Lagerung einer Fahrzeugkabine oder ähnlichen Anwendungen eingesetzt wird. Für den Betrieb der Vorrichtung 1 ist der konstruktive Aufbau des zu testenden Bauteils untergeordnet, abgesehen von der Bauteilgröße und dem Belastungsspektrum, das von der Vorrichtung 1 aufzubringen ist.

Die Vorrichtung 1 umfasst ein Gerüst 5 als Gehäuse und mindestens einen elektrischen Linearantrieb 7. Der Linearantrieb 7 weist ein ortsfestes Primärteil 9 und ein dazu translatorisch beweglichen Sekundärteil 11 auf. Das schlittenförmige Sekundärteil 11 weist eine Aufnahme 13 für das zu testende Bauteil 3 auf. Zwischen dem Sekundärteil und dem Primärteil besteht eine Führung 12, symbolisch dargestellt durch Laufräder 14 am Sekundärteil 11, die auf einer Führungsbahn 16 am Primärteil einen Luftspalt 18 zwischen beiden Baugruppen 9; 11 definiert.

Das Gerüst 5 weist mindestens zwei parallele Führungssäulen 15 mit einer Führungsplatte 17 auf. An der Führungsplatte 17 greift das Sekundärteil 11 an. Auf der dem Sekundärteil 11 gegenüberliegenden Seite der Führungsplatte 17 ist die erste Aufnahme 13 für das zu testenden Bauteil 3 angebracht.

Die Führungssäulen 15 weisen eine verbindende Haltebrücke 19 auf, an der eine Gegenaufnahme 21 für das zu testende Bauteil 3 montiert ist. Am gegenüberliegenden Ende schließt eine Bodenplatte 23 das Gerüst 5. In dieser Ausführung weist die Vorrichtung zwei Paare von Führungssäulen 15 auf, die über eine Verbindungsbrücke 25 gemeinsam die Gegenaufnahme 21 führen. Das Primärteil 9 ist pro Sekundärteil 11 zweifach ausgeführt ist und erstreckt sich beidseitig parallel zum Sekundärteil 11. Dabei bildet der Linearantrieb 7 zu den Führungssäulen 15 bzw. zum Gehäuse eine separate auswechselbare Baueinheit. Beispielhaft ist der Linearantrieb 5 auf einer Basisplatte 27 angeordnet, die wiederum von der Bodenplatte 23 des Gerüsts 5 trennbar ist. Man kann deshalb den Linearantrieb 7 austauschen, ohne die Führungssäulen 15, die Haltebrücke 19 oder die Bodenplatte 23 voneinander lösen zu müssen.

Das Sekundärteil 11 ist räumlich zwischen den beabstandeten Führungssäulen 15 angeordnet. Diese Anordnung sorgt dafür, dass der Linearantrieb 7 die Führungssäulen nicht umschließt und damit eine Demontage aus der Vorrichtung vereinfacht.

Grundsätzlich kann die Vorrichtung 1 auch mit einem einzigen Linearantrieb 7 eingesetzt werden. In diesem konkreten Beispiel weist die Vorrichtung 1 jedoch zwei parallel wirkende Linearantriebe 7 auf. Über eine Tragplatte 29 sind dann die beiden Linearantriebe 7 miteinander verbunden, wahlweise nebeneinander oder hintereinander an unterschiedlichen Paaren von Führungssäulen. Die Aufnahme 13 für das zu testenden Bauteil 3 ist möglichst mittig zwischen den beiden Linearantrieben 7 angeordnet. Die Tragplatte wiederum kann Bestandteil eines Aufnahmegehäuses sein, wie die Fig. 2 zeigt.

Bevorzugt weist das Sekundärteil eine horizontale Anordnung von reihenförmigen Permanentmagneten 31 auf. Die Anzahl der Reihen wird dem maximale Hubweg der Vorrichtung 1 angepasst, um möglichst eine geringe Masse des Sekundärteils 11 zu erreichen. Aufgrund der Bestückung des mindestens einen Sekundärteils 11 mit Permanentmagneten ist an dem Sekundärteil 11 keine Versorgungsleitung angeschlossen, die bei den ggf. hochfrequenten Bewegungen des Sekundärteils 11 mitgeführt werden müssen.

Bei einer Vorrichtung 1, die auch mobil einsetzbar sein soll, ist die Stromversorgung eine wichtige Bedingung. Der Linearantrieb 7 umfasst deshalb einen Netzanschluss 33 und dazu mindestens einen parallelen Stromspeicher 35. Als Stromspeicher 35 kommen beispielsweise Kondensatoren zur Anwendung, die bevorzugt modulartig einsetzbar sind. Je nach Randbedingung, d. h. Netzleistung und Lastprofil für das zu testende Bauteil werden die Stromspeicher eingesetzt bzw. die eingesetzten Stromspeicher temporär genutzt und bei einem Minderbedarf über den Netzanschluss geladen.

Dafür wird anhand eines Belastungsspektrums der Vorrichtung ein Strombedarf für den Betrieb der Vorrichtung ermittelt. Das Belastungsspektrum ist z. B. in einem Lastenheft zu dem zu testenden Bauteil spezifiziert. Bei Belastungsspitzen, die über den Netzanschluss 33 nicht mehr erfüllt werden können, wird zusätzlich auf die Stromspeicher 35 zurückgegriffen. Dafür wird über den ermittelten Strombedarf die Stromspeichergröße oder die mögliche Ladekapazität bestimmt. Beispielhaft sind als Stromspeicher Kondensatoren dargestellt, die bei einer Minderbelastung wieder über den Netzanschluss aufgeladen werden. In einer zentralen Steuerung 37 ist ein entsprechendes Modul für die optimierte Stromversorgung abgelegt.

Eine weitere Maßnahme zur Minimierung der Stromaufnahme besteht darin, dass die Vorrichtung einen Datenspeicher 39 für relevante Parameter des zu testenden Bauteils 3 aufweist, wobei z.B. ein Parameter eine dem Linearantrieb 7 entgegenstehenden Widerstandskraft des Bauteils beschreibt, und diese Widerstandskraft einer Ansteuerung für den elektrischen Linearantrieb zur Bestimmung der notwendigen Antriebskraft zugeführt wird. Konkret kann man z. B. die notwendige Energie für die Einhaltung einer Stillstandposition des Sekundärteils 11 reduzieren. Wenn das zu testende Bauteil, z. B. ein Schwingungsdämpfer ist, jeder Anregung eine definierte Dämpfkraft entgegensetzt, dann kann man bei Kenntnis des funktionalen Zusammenhangs zwischen Anregung und Dämpfkraft den Energieeinsatz für den Linearantrieb 7 um einen Betrag in Relation zur Dämpfkraft reduzieren. Gegebenenfalls kann eine der Aufnahmen 13; 21 mit einem Kraftsensor 40 bestückt sein, der ein Messsignal der Steuerung 37 zuführt und damit Realdaten liefert.

Die Vorrichtung wird von Personal bedient, mit einem zu testenden Bauteil bestückt oder gewartet. Damit die Vorrichtung ausgehend von einem Stillstand des Sekundärteils 11 nicht unerwartet eine Betriebsbewegung ausführt, ist eine Sicherheitseinrichtung vorgesehen. Grundsätzlich wäre auf dem ersten Blick eine mechanische Blockierung des Sekundärteils 11 vorteilhaft, doch müsste man dann bei dieser konkreten Lösung eine Blockierung zwischen dem Primär 9- und dem Sekundärteil 11 des Linearantriebs 7 oder zwischen mindestens einer Führungssäule 15 und der Führungsplatte 17 versehen. Eine Blockiereinrichtung, die an dem Sekundärteil 11 angreift, würde die Masse des Sekundärteils erhöhen und damit deren Dynamik verschlechtern. Anderseits wäre für eine Blockiereinrichtung zwischen einer Führungssäule 15 und der Führungsplatte 17 ein erheblicher mechanischer Aufwand notwendig, da die Führungsqualität, d. h. minimalste Reibung und geringstes Radialspiel, durch eine Blockiereinrichtung nicht belastet werden darf. Deshalb umfasst eine Stromversorgung 41 eine elektronische Schutzeinrichtung. Die Stromversorgung umfasst alle Stromquellen und ein Leitungssystem zwischen den Komponenten (33; 35) Nur wenn die Schutzeinrichtung 43 eingeschaltet ist, kann das Sekundärteil bei aktivierter Stromversorgung eine Betriebsbewegung ausführen. Die Schutzeinrichtung ist unabhängig von einem Betätigungsschalter 45. Um die Schutzeinrichtung 43 auf ihre Funktionstüchtigkeit zu überprüfen, wird ein Sicherheitstest durchgeführt. Üblicherweise würde man bei einem Sicherheitstest für eine Schutzeinrichtung 43, die das unbeabsichtigte Starten der Vorrichtung verhindern soll, davon ausgehen, dass der Sicherheitstest auch exakt bei dieser Ausgangssituation startet. In der Ausgangssituation befindet sich das Sekundärteil 11 in maximaler Überdeckung mit den beiden zugeordneten Primärteilen 9. Die Aufnahme 13 der Führungsplatte 17 und die Gegenaufnahme 21 an der Verbindungsbrücke 25 weisen dann den maximalen Abstand auf.

Dieser Sicherheitstest basiert jedoch auf einem Falltest des Sekundärteils. Dafür wird das Sekundärteil 11 in eine angehobene Ausgangsposition gebracht, z. B. einer maximale Hubposition des Sekundärteils 11. Nachdem diese Hubposition erreicht ist, wird die Stromversorgung für den Linearmotor 7 ausgeschaltet und die Schutzeinrichtung 43 aktiviert, d.h. eingeschaltet. Aufgrund des Eigengewichts des Sekundärteils 11 führt dieses eine erste Fallbewegung aus. Dabei wird eine erste Fallzeit ermittelt. Bei diesem Betriebszustand der Schutzeinrichtung 43 fungiert der Linearantrieb 7 als Generator, so dass dem Sekundärteil eine gewisse Widerstandskraft gegen die Fallbewegung entgegensteht.

Danach wird das Sekundärteil 11 erneut in die besagte Ausgangsposition angehoben. Wiederum wird die Stromversorgung unterbrochen, aber nun ist die Schutzeinrichtung 43 deaktiviert (s. Figur 1). Somit kann sich keine Generatorfunktion einstellen. Es wirken lediglich die mechanischen Reibkräfte im Bereich der Führungselemente. Es wird eine zweite Fallzeit gemessen. Danach werden die beiden Fallzeiten verglichen. Bei einer unterschiedlichen Fallcharakteristik, z. B. Unterschreiten einer Mindestdifferenz der Fallzeiten, wird ein Fehler signalisiert, da dann davon auszugehen ist, dass der Generatoreffekt nicht aufgetreten ist und die Schutzeinrichtung 43 folglich nicht den gewünschten Sicherheitseffekt bietet. Eine unterschiedliche Fallcharakteristik kann z. B. darin bestehen, dass zwar die Fallzeiten gleich sind, jedoch der Geschwindigkeitsverlauf des Sekundärteils abweichend ist.

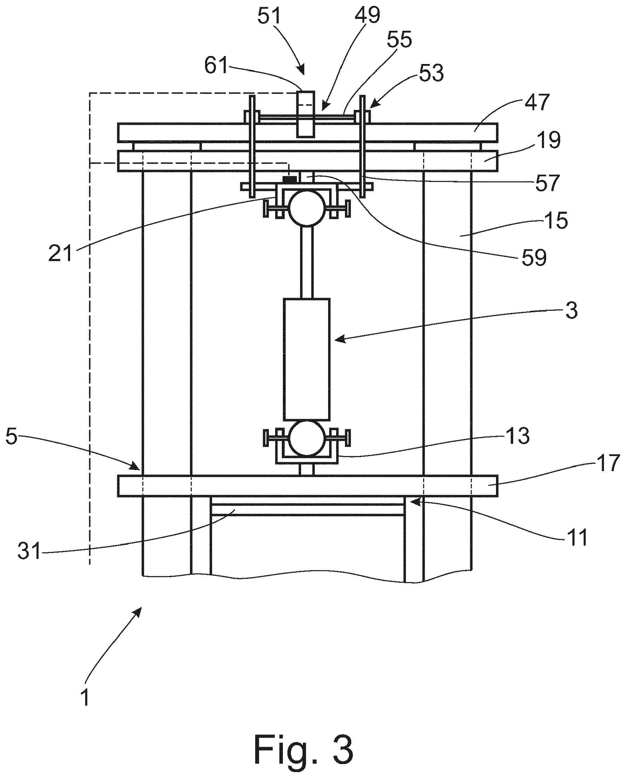

Die Fig. 3 zeigt eine Ausführungsvariante basierend auf der Vorrichtung 1 nach Fig. 1, bei der die Gegenaufnahme 21 axial zur Verbindungsbrücke 19 verstellbar ist, um Bauteile 3 mit verschiedener Baulänge einfacher testen zu können. In diesem konkreten Fall weist das Gerüst 5 eine Tragplatte 47 für eine Antriebseinrichtung 49 auf, die die Gegenaufnahme 21 axial zur Verbindungsbrücke 19 verstellt. Die Antriebseinrichtung 49 ist bevorzugt als elektrischer Antrieb 51 in Verbindung mit einem Winkeltrieb 53 ausgeführt. Der Winkeltrieb 53 umfasst bevorzugt mindestens zwei horizontale Gewindespindeln 55, die wiederum zwei vertikale Gewindespindeln 57 antreiben, an denen zumindest mittelbar die Gegenaufnahme 21 angeschlossen sind. Die Antriebseinrichtung 49 kann hinsichtlich der Aufnahme der axialen Stützkräfte auf die Gegenaufnahme 21 derart aufgebaut sein, dass die Antriebseinrichtung 49 diese Stützkräfte aufnimmt. Man jedoch auch eine Sperrung zwischen einer Axialführung 59 der Gegenaufnahme 21 und der Verbindungsbrücke 25 vorsehen.

Die Antriebseinrichtung 49 kann auch mit einer Wegsensor 61 bestückt sein, um den Verfahrweg der Gegenaufnahme 21 zur Tragplatte 47 erfassen zu können. Das Signal des Wegsensors 61 wird an die Steuerung 37 geleitet und steht damit der Steuerung der gesamten Vorrichtung 1 zur Verfügung.

### Bezugszeichen

- 1: Vorrichtung
- 3: zu testendes Bauteil
- 5: Gerüst
- 7: Linearantrieb
- 9: Primärteil
- 11: Sekundärteil
- 12: Führung
- 13: Aufnahme
- 14: Laufrad
- 15: Führungssäulen
- 16: Führungsbahn
- 17: Führungsplatte
- 18: Luftspalt
- 19: Haltebrücke
- 21: Gegenaufnahme
- 23: Bodenplatte
- 25: Verbindungsbrücke
- 27: Basisplatte
- 29: Tragplatte
- 31: Permanentmagneten
- 33: Netzanschluss
- 35: Stromspeicher
- 37: Steuerung
- 39: Datenspeicher
- 40: Kraftsensor
- 41: Stromversorgung
- 43: Schutzeinrichtung
- 45: Betätigungsschalter
- 47: Tragplatte
- 49: Antriebseinrichtung
- 51: elektrischer Antrieb
- 53: Winkeltrieb
- 55: horizontale Gewindespindel
- 57: vertikale Gewindespindel
- 59: Axialführung der Gegenaufnahme
- 61: Wegsensor

## Patentansprüche

1. Vorrichtung (1) zum Testen von schwingend belasteten Bauteilen (3), umfassend ein Gerüst (5) und mindestens einen elektrischen Linearantrieb (7) mit einem Stator als Primärteil (9) und einem dazu translatorisch beweglichen Sekundärteil (11), das an eine Aufnahme (13) für das zu testende Bauteil (3) angeschlossen ist, **dadurch gekennzeichnet, dass** das Gerüst (5) mindestens zwei parallele Führungssäulen (15) aufweist, an denen eine Führungsplatte (17) mit der Aufnahme (13) gleitend gelagert ist, wobei das Sekundärteil (11) kraftübertragend mit der Führungsplatte (17) in Wirkverbindung steht, wobei das Primärteil (9) pro Sekundärteil (11) zweifach ausgeführt ist und der Linearantrieb (7) eine zum Gerüst (5) separate auswechselbare Baueinheit bildet.

2. Vorrichtung nach Anspruch 1, **dadurch gekennzeichnet, dass** das Sekundärteil (11) räumlich zwischen den beabstandeten Führungssäulen (15) angeordnet ist.

3. Vorrichtung nach Anspruch 1, **dadurch gekennzeichnet, dass** die Vorrichtung (1) zwei Paare von Führungssäulen (15) aufweist, die gemeinsam die Aufnahme (13) führen.

4. Vorrichtung nach Anspruch 1, **dadurch gekennzeichnet, dass** die Vorrichtung (1) zwei parallel wirkende Linearantriebe (7) aufweist.

5. Vorrichtung nach Anspruch 1, **dadurch gekennzeichnet, dass** das Sekundärteil (11) eine Anordnung von reihenförmigen Permanentmagneten (31) aufweist.

6. Vorrichtung nach Anspruch 1, **dadurch gekennzeichnet, dass** die Führungssäulen (15) eine verbindenden Haltebrücke (19) aufweisen, an der eine Gegenaufnahme (21) für das zu testende Bauteil (3) montiert ist.

7. Vorrichtung nach Anspruch 1, **dadurch gekennzeichnet, dass** der Linearantrieb (7) einen Netzanschluss (33) und dazu mindestens einen parallelen Stromspeicher (35) umfasst.

8. Vorrichtung nach Anspruch 1, **dadurch gekennzeichnet, dass** der Linearantrieb (7) eine Steuerung (37) zum gezielten Ansteuern des Linearantriebs (7) und funktional in Reihe zur Steuerung (37) eine elektrische Sicherheitseinrichtung (43) gegen unbeabsichtigten Start der Vorrichtung (1) aufweist.

9. Verfahren zum Betrieb einer Vorrichtung nach Anspruch 1, wobei die Vorrichtung (1) zusätzlich zu einem Netzanschluss (33) einen Stromspeicher (35) aufweist, **dadurch gekennzeichnet, dass** anhand eines Belastungsspektrums der Vorrichtung (1) ein Strombedarf für den Betrieb der Vorrichtung ermittelt wird, wobei über den ermittelten Strombedarf die Stromspeichergröße (35) oder die mögliche Ladekapazität bestimmt wird.

10. Verfahren nach Anspruch 1, zur Überprüfung der Funktionssicherheit des Linearantriebs (7), **dadurch gekennzeichnet, dass** der Sicherheitstest einen Falltest des Sekundärteils umfasst, indem
- das Sekundärteil (11) in eine angehobene Ausgangsposition gebracht wird,
- die Stromversorgung (41) für den Linearmotor (7) ausgeschaltet und die Schutzeinrichtung (43) aktiviert wird, wodurch das Sekundärteil (11) eine erste Fallbewegung ausführt
- Erfassen einer ersten Fallzeit
- erneutes Anheben des Sekundärteils (11) in die besagte Ausgangsposition
- die Stromversorgung (41) unterbrochen und die Schutzeinrichtung (43) deaktiviert wird
- Erfassen einer zweiten Fallzeit
- die beiden Fallzeiten verglichen werden und bei einer unterschiedlichen Fallcharakteristik ein Fehler signalisiert wird.

11. Verfahren zum Betrieb einer Vorrichtung nach Anspruch 1, **dadurch gekennzeichnet, dass** die Vorrichtung einen Datenspeicher (39) für relevante Parameter des zu testenden Bauteils (3) aufweist, wobei ein Parameter eine dem Antrieb entgegenstehenden Widerstandskraft des Bauteils beschreibt, und diese Widerstandskraft einer Ansteuerung für den elektrischen Linearantrieb (7) zur Bestimmung der Antriebskraft zugeführt wird.
